# EUROPEAN PATENT APPLICATION

(11) **EP 2 884 743 A1**
(43) Date of publication of application: **17.06.2015**
(21) Application number: 13306711.6
(22) Date of filing: 12.12.2013
(51) Int. Cl.: H04N 7/14, H04N 7/15, H04L 12/18, G06T 3/40

(54) **Process for managing the exchanges of video streams between users of a video conference service**

(71) Applicant: ALCATEL LUCENT, 92100 Boulogne-Billancourt (FR)
(72) Inventor: Alberi-Morel, Marie-Line, 91620 Nozay (FR); Osmond, Marin, 35000 Rennes (FR); Laisnard, Cédric, 35000 Rennes (FR); Faucheux, Frédéric, 91620 Nozay (FR)
(74) Representative: Sayettat, Julien Christian

(57) **Abstract**

Process for managing the exchanges of video streams (4a, 4b, 4c) between users that are connected through their terminals (1a, 1b, 1 c) to a video conference service provided by a server (2) over at least one network (3, 3a, 3b), each user sending through his terminal (1a, 1b, 1 c) to said server a video stream (4a, 4b, 4c) and receiving video streams (6a, 6b, 6c) of at least one other user, said process providing: a step for decoding at least one video stream (4a, 4b, 4c) sent by a user to said server; a step for building from said decoded video stream a specific video stream (6a, 6b, 6c) for each user according to contextual information; a step for encoding and sending said specific video streams to corresponding users; the building step providing for increasing the resolution and the visual quality of the decoded video stream (4a, 4b, 4c) by means of a Super Resolution algorithm adapted to use information extracted from at least one dictionary (9a, 9b), said resolution and visual quality increased video stream being encoded and sent to users according to contextual information.

## Description

The invention relates to a process for managing the exchanges of video streams between users that are connected through their terminals to a video conference service provided by a server over at least one network, such as a server for providing a video conference service that comprises means for implementing such a process.

With the increasing number of mobile and portable terminals, such as laptops, tablets or smartphones, the demand in video conference and/or multimedia web services has exploded and the market has evolved deeply. Consequently, mobile network operators have, in one hand, to keep a valuable role in the mobile video conference service chain and, in the other hand, to avoid the predictable network congestion problems by saving substantial capacity over their networks and maintaining visual comfort for their users connected to their video conference services.

To do so, the standardised Internet Protocol Multimedia Subsystem (IMS) architecture allows network operators to play a central role in traffic distribution of video conference data, so that said operators can be more than simple "bite pipes". Moreover, the IMS architecture can provide flexible techniques for managing the visual quality of video streams exchanged between users in a video conference service, such as video codec agnostic solutions, to address the challenge of capacity saving.

In particular, for managing video streams exchanged in a video conference service, the IMS architecture can comprise at least one Media Resource Function (MRF) server that integrates advanced video conferencing features, additional audio and video codecs and more other functionalities, such as streaming, transcoding, transframing and recording functionalities, and thus represents a major step in the evolution of software media processing.

For example, the MRF server provided by the Alcatel-Lucent® society provides a video conference service comprising notably a functionality for selecting, among the video streams sent by all users connected to said service, the main video stream to be sent to said users, as for example the video stream of the loudest speaking user or the video stream of the user with the more important continuous presence time in said service. Moreover, this MRF server accepts any of the supported codecs and any resolution format, notably the Quarter Common Intermediate Format (QCIF), the Common Intermediate Format (CIF), the Video Graphics Array (VGA) format or the 720p (pixels) format.

Besides, the MRF server of the Alcatel-Lucent® society provides several video conferencing modes, wherein a specific video stream is built and sent to a given user connected to the video conference service from at least one video stream sent by a user connected to said service and according to contextual information, notably about the technical capabilities of the terminal and/or the network through which said given user is connected to the video conference service, said contextual information being defined for example during the connection of said given user to said service.

In particular, the MRF server of Alcatel-Lucent® comprises an active speaker/switching mode, wherein only the video stream of the loudest speaking user is sent to all users, a tiled display mode, wherein several video streams of users are combined to build a specific tiled video stream for all users, such as a several video output mode, wherein several types of specific video streams are built and sent to different users according to contextual information that rely notably on the equipment characteristics of said users. For example, a specific video stream built according to the switching mode can be provided to a user connected through a terminal with poor capabilities, and a specific video stream built according to the tiled display mode can be provided a user connected through a more sophisticated terminal.

Moreover, to increase the users' quality of experience, it would be advantageous to increase the resolution and/or the visual quality of the video streams sent by said users to build specific video streams with said resolution and/or visual quality increased video streams. However, if all of the video streams exchanged between the users of the video conference service would be sent with high visual quality and especially with high resolution, a lot of bandwidth and a lot of bitrate would be required, which would increase the risk of network congestion. Moreover, some users are connected to the video conference service through a terminal and/or a network with poor technical capabilities, as for example terminals having a low screen resolution and congested network, such that they send video streams with notably low resolution and cannot receive specific video streams with an increased resolution and visual quality.

Currently, in the category of video processing, the best existing solution for limiting the network congestion is the compressive sensing method which aims at limiting the transmission rate, notably of video streams with high visual quality. However, this method require a specific shaping of the transmitted video stream to enable the compression and the recovering of the initial source video stream.

Interpolation techniques can also be used to augment the visual quality, and especially the resolution of a video stream. In particular, they present a low complexity and act at the decoded video level rather than during the coding of video streams, such that they could be implemented in real time applications such as video conferencing, and notably in the server providing a video conference service for avoiding the sending of encoded packets of high resolution streams that consume a lot of bandwidth. However, the existing interpolation techniques achieve a resolution upscaling with performances that are too poor, notably as they generally introduce an undesirable blurring effect in the video streams.

The invention aims to improve the prior art by proposing a process wherein specific video streams with an increased resolution and an increased visual quality can be built easily for users connected to a video conference service, and thus without any specific requirement on video codecs and/or on the transmitted video streams, while limiting the network bandwidth consumption.

For that purpose, and according to a first aspect, the invention relates to a process for managing the exchanges of video streams between users that are connected through their terminals to a video conference service provided by a server over at least one network, each user sending through his terminal to said server a video stream and receiving video streams of at least one other user connected to said video conference service, said process providing:
- a step for decoding at least one video stream sent by a user to said server;
- a step for building from said decoded video stream a specific video stream for each user according to contextual information;
- a step for encoding and sending said specific video streams to corresponding users;
the building step providing for increasing the resolution and the visual quality of the decoded video stream by means stored Super Resolution algorithm adapted to use information extracted from at least one dictionary, said resolution and visual quality increased video stream being encoded and sent to users according to contextual information.

According to a second aspect, the invention relates to a server for providing a video conference service over at least one network, users being connected to said service through their terminals and exchanging video streams between each other, each user sending through his terminal to said server a video stream and receiving video streams of at least one other user connected to said video conference service, said server comprising:
- at least one device for decoding at least one video stream sent by a user to said server;
- at least one device for building from said decoded video stream a specific video stream for each user according to contextual information;
- at least one device for encoding and sending said specific video streams to corresponding users;
at least one building device being an increasing device that comprises a dictionary, such as means for implementing a Super Resolution algorithm adapted for extracting and using information from said dictionary to increase the resolution and the visual quality of a decoded video stream, the encoding device further encoding and sending said resolution and visual quality increased video stream to users according to contextual information.

According to a third aspect, the invention relates to a computer program adapted to perform such a process.

According to a fourth aspect, the invention relates to a computer readable storage medium comprising instructions to cause a data processing apparatus to carry out such a process.

Other aspects and advantages of the invention will become apparent in the following description made with reference to the appended figures represented each a server for providing a video conference service over at least one network that comprises means for implementing a process according to respectively an embodiment of the invention.

In relation to those figures, a process for managing the exchanges of video streams between users that are connected through their terminals 1 a, 1 b, 1 c to a video conference service provided by a server 2 over at least one network 3, 3a, 3b, such as a server 2 for providing a video conference service and means for implementing such a process, would be described below.

In particular, the process can be performed by an adapted computer program, or by a computer readable storage medium comprising instructions to cause a data processing apparatus to carry out said process.

The server 2 providing the video conference service can be a Media Resource Function (MRF) server implemented in a IMS architecture for a mobile telephony operator, such as the MRF server provided by the Alcatel-Lucent® society, and the terminals 1 a, 1b, 1 c through which users can connect to said video conference service can be notably a personal computer 1 a, such as a desk computer or a laptop computer, or a tablet 1b, such as the Ipad® tablet provided by the Apple@ society or the Galaxy Tab® provided by the Samsung@ society, or even a smartphone 1 c.

For connecting to the server 2, each user sends through his terminal 1 a, 1 b, 1 c a request, as for example an INVITE message according to the SIP (for Session Initiation Protocol) standard. In response, the server 2 sends back to the terminal 1a, 1b, 1c an acknowledgment message, such as a 200 OK message according to the SDP (for Session Description Protocol) standard, and thus the connection of the user to the video conference service is established.

In a video conference service, especially during a video conference session in said video conference service, each user participating to said session sends through his terminal 1a, 1b, 1c to the server 2 a video stream 4a, 4b, 4c comprising notably a video capture of said user himself, and receives reciprocally video streams of at least one other user connected to said video conference service within said session.

The process provides a step for decoding at least one video stream 4a, 4b, 4c sent by a user to the server 2. To do so, the server 2 comprises at least one device 5 for decoding at least one of the video streams 4a, 4b, 4c sent by the users. In particular, the decoding device 5 can be adapted to decode video streams 4a, 4b, 4c that are initially encoded in any known format, as for example according to the Real-Time Transport Protocol (RTP), into a common standard format, as for example the YUV format.

The process further provides a step for building from the decoded video stream(s) a specific video stream 6a, 6b, 6c for each user according to contextual information. To do so, the server 2 comprises at least one device for building from the video stream(s) 4a, 4b, 4c decoded by the decoding device(s) 5 a specific video stream 6a, 6b, 6c for each user according to contextual information.

The contextual information can concern the user for which the specific video stream 6a, 6b, 6c is built and can be established according to at least information about technical capacities of the terminal 1a, 1b, 1c and/or the network 3, 3a, 3b through which said user is connected to the video conference service, so that said user will receive specific video streams 6a, 6b, 6c that are well adapted to his available technical capabilities. In the same way, the contextual information can also concern the users who send the video streams 4a, 4b, 4c used to build the specific video stream 6a, 6b, 6c.

To do so, the server 2 comprises means for establishing contextual information according to at least such information about the technical capabilities available at the side of a user. In particular, such information about technical capabilities can be provided to the server 2 into the INVITE SIP message that a user sends to said server during his connection to the video conference service.

Thus, the server 2 can define such contextual information, notably automatically, during the connection of a user to the video conference service. In the same way, the server 2 can also define and/or update contextual information throughout the participation of the user within the video conference service.

Moreover, the server 2 can communicate the established contextual information to the user through the 200 OK SDP message said server sends back to said user, so as to define notably the format of the video streams 4a, 4b, 4c to be sent and the specific video stream 6a, 6b, 6c to be built. For example, the 200 SDP OK message can comprise in particular specific media lines that are defined to provide complementary information about the format of the video streams 4a, 4b, 4c, 6a, 6b, 6c, for example by using the RFC 6236 standard for Negotiation of Generic Image Attributes.

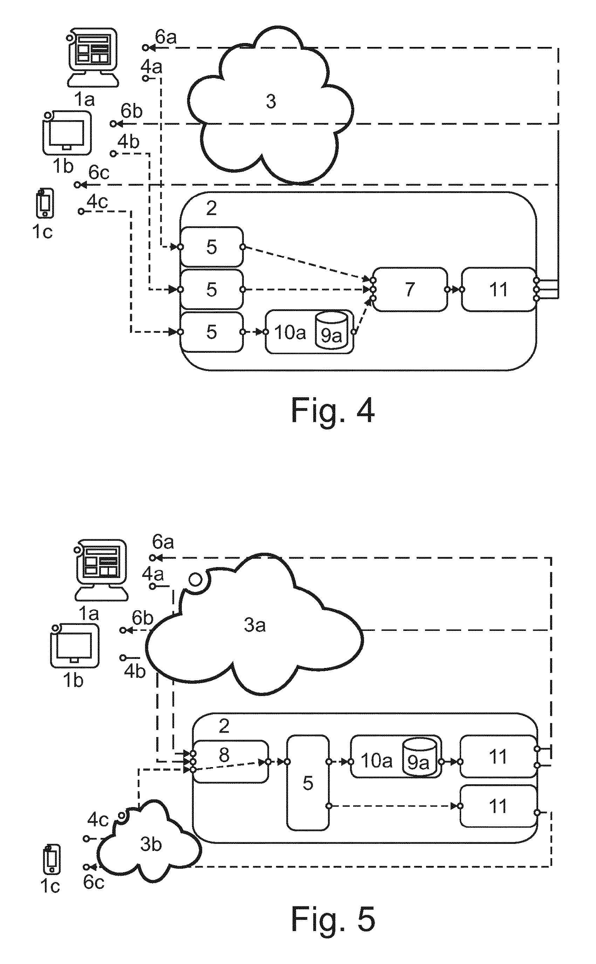

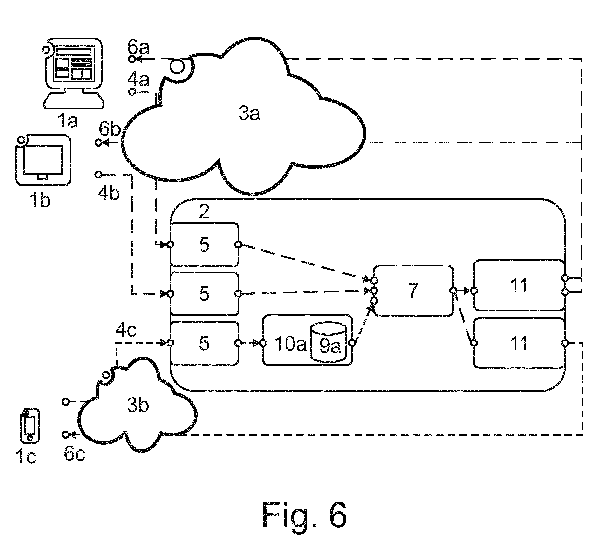

The building step can provide for combining decoded video streams 4a, 4b, 4c of several users to build a single tiled specific video stream 6a, 6b, 6c for at least one user, notably according to such contextual information. To do so, in relation to figures 4 and 6, the server 2 comprises a device 7 for doing such a combination to build such a tiled specific video stream 6a, 6b, 6c.

In particular, the combining device 7 can comprise means for helping to define easily the display format of the tiled specific video streams 6a, 6b, 6c, for example by providing specific display templates according to the number of users connected to the video conference service, so as to provide a homogeneous tiled display to users receiving specific tiled video streams 6a, 6b, 6c.

For example, the server 2 can comprise a tiled display mode wherein such a tiled specific video stream is built for all users that are connected to the video conference service, said mode being defined through the 200 SDP OK message the server 2 sends back to users during their connection.

According to an embodiment, the process can provide a prior step for analysing the video streams 4a, 4b, 4c to detect the loudest speaking user, so that the building step will build a specific video stream 6a, 6b, 6c wherein the video stream 4a, 4b, 4c of said loudest speaking user is highlighted.

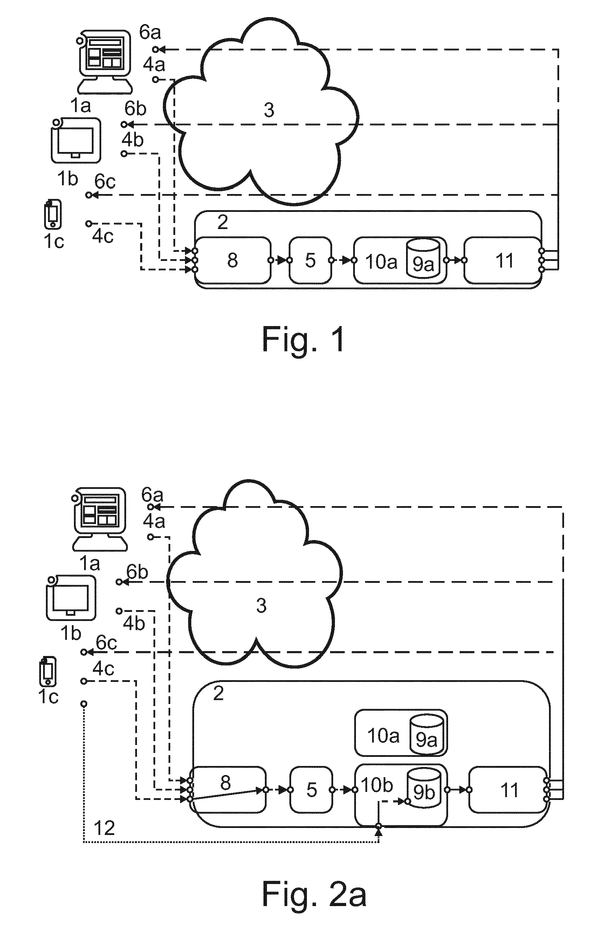

To do so, in relation to figures 1, 2a, 2b, 3 and 5, the server 2 comprises a detection device 8 comprising means for prior analysing the video streams 4a, 4b, 4c to do such a detection, so that a specific video stream 6a, 6b, 6c will be built wherein the video stream 4a, 4b, 4c of said loudest speaking user is highlighted.

For example, the server 2 can provide a switching mode, wherein a specific video stream 6a, 6b, 6c is built for each user only from the video stream 4a, 4b, 4c of the loudest speaking user, so that said video stream would be displayed alone on the screen of the terminal 1 a, 1 b, 1 c of all users. This switching mode is particularly well adapted for users connected through a terminal 1 a, 1b, 1c and/or a network 3b with poor technical capabilities and/or congested, such that the tiled display format is not available for him. Moreover, this switching mode can be defined by the server 2 according to contextual information that said server communicates through the 200 SDP OK message that is sent back to the users during their connection.

Moreover, the server 2 can provide to implement such a loudest speaking user detection in the tiled display mode, for example by highlighting the video stream 4a, 4b, 4c of the loudest speaking user with a coloured frame and/or a big sized frame in a tiled specific video stream 6a, 6b, 6c sent to a user.

Besides, the server 2 can provide a several video output mode, wherein specific video streams 6a, 6b, 6c are built according to one of the switching mode and the tiled display mode for each user, and especially according to technical capabilities available at said user's side.

To offer to the users a great quality of experience, the process also provides for increasing the resolution and the visual quality of the decoded video stream 4a, 4b, 4c by means of a Super Resolution algorithm adapted to use information extracted from at least one dictionary 9a, 9b, said key frames corresponding to still images with high visual quality. In particular, the resolution of a video stream 4a, 4b, 4c concerns its number of pixels and the visual quality of such a video stream 4a, 4b, 4c can be increased to provide a sharper image, such as more fluidity and no image degradation.

To do so, the server 2 comprises at least one building device 10a, 10b that is an increasing device, said increasing device comprising a dictionary 9a, 9b, such as means for implementing a Super Resolution algorithm adapted for extracting and using information from said dictionary to increase the resolution and the visual quality of a decoded video stream 4a, 4b, 4c coming from the decoding device(s) 5.

According to an embodiment, the process can provide for detecting the loudest speaking user and to build a specific tiled video stream 6a, 6b, 6c wherein the video stream 4a, 4b, 4c of said loudest speaking user is highlighted by means of higher resolution and higher visual quality than that of the video streams 4a, 4b, 4c of the other users.

The Super Resolution techniques, such that the interpolation techniques, are commonly applied directly on uncompressed and decoded video streams, and thus are well adapted for implementation into a video conference service. Moreover, the concept of Super Resolution techniques, as that of the interpolation techniques, consists in displaying video streams encoded with low resolution in a full screen in higher resolution and with an increased visual comfort.

However, the Super Resolution techniques perform the display in full screen of low bitrate encoded video streams with better performances than the interpolation techniques. Indeed, contrary to interpolation techniques, the Super Resolution techniques increase the number of pixels while predicting the missing fine High Resolution details in a Low Resolution original video frame, so as to display said video frame in the High Resolution format with a higher visual quality, notably with a sharper image, with more fluidity and no image degradation.

Moreover, the Super Resolution techniques, because they can be performed according to only a Low Resolution video stream without any other additional data, can be viewed as a good alternative solutions to the well-known Scalable Video Coding (SVC) techniques for increasing the resolution and/or the visual quality of video streams while saving the network capacity, notably the available bandwidth. Indeed, the SVC techniques require the sending of a base layer comprising a base video stream with low resolution and the additional sending of enhancing layers for increasing the resolution and/or the visual quality of said base video stream, which obviously consumes more bandwidth.

Thus, by implementing such resolution and visual quality increasing solutions into the server 2, especially a MRF server, IMS operators will be able to save network capacity to manage network congestion, to enhance the video rendering in tiled display mode, to manage heterogeneous terminals 1 a, 1 b, 1 c with different technical capabilities sending video streams 4a, 4b, 4c with different resolution and visual qualities and receiving specific video streams 6a, 6b, 6c in the switching mode and/or in the tiled display mode, such as to manage conferences to users connected through networks 3, 3a, 3b with various technical capabilities.

In particular, each user can send to the server 2 video streams 4a, 4b, 4c encoded with a low resolution, and notably at a lower bitrate, and said server can choose for each user connected to the video conference service, according to contextual information established according to technical capabilities available at said user's side, the most suitable display mode for said user, and thus said server can provide to said user a suited specific video stream 6a, 6b, 6c the resolution and the visual quality thereof are increased according to said technical capabilities.

Thus, at one side, it avoids wasting bandwidth for users that cannot receive specific video streams 6a, 6b, 6c with increased resolution and visual quality, and at the other side every user sending low resolution video streams 4a, 4b, 4c can be ensured that said video streams would be displayed with high resolution and high visual quality to other users with enough available technical capabilities.

The process can notably provide for increasing the resolution and the visual quality of a decoded video stream 4a, 4b, 4c by using information extracted from still images with high resolution and high visual quality that are stored in at least one dictionary 9a, 9b.

In particular, the process can provide for using information extracted from still images that are decorrelated from the content of the video stream 4a, 4b, 4c. To do so, in relation to figures 1, 2a, 2b, 3, 4, 5 and 6, the server 2 comprises an increasing device 10a the dictionary 9a thereof stores such various still images. However, even though such an increasing method gives good results from low resolution video streams 4a, 4b, 4c, an even better video reconstruction can be obtained for building specific video streams 6a, 6b, 6c with higher resolution and higher visual quality by exploiting additional metadata coming from the video streams 4a, 4b, 4c. Nevertheless, to limit the bandwidth consumption, a trade off should be done to balance the increase of resolution and visual quality and the minimization of the required bit rate to send the low resolution video streams 4a, 4b, 4c and the additional metadata.

To do so, the process can advantageously provide for increasing the resolution and the visual quality of a video stream 4a, 4b, 4c by means of information extracted from reference frames that are snapshots of said video stream, the user that sends said video stream also sending such reference frames at a given period, for example every two seconds, to update regularly the dictionary 9b storing said reference frames. This feature is even more advantageous that it help increasing the resolution and the visual quality without requiring too much additional bandwidth.

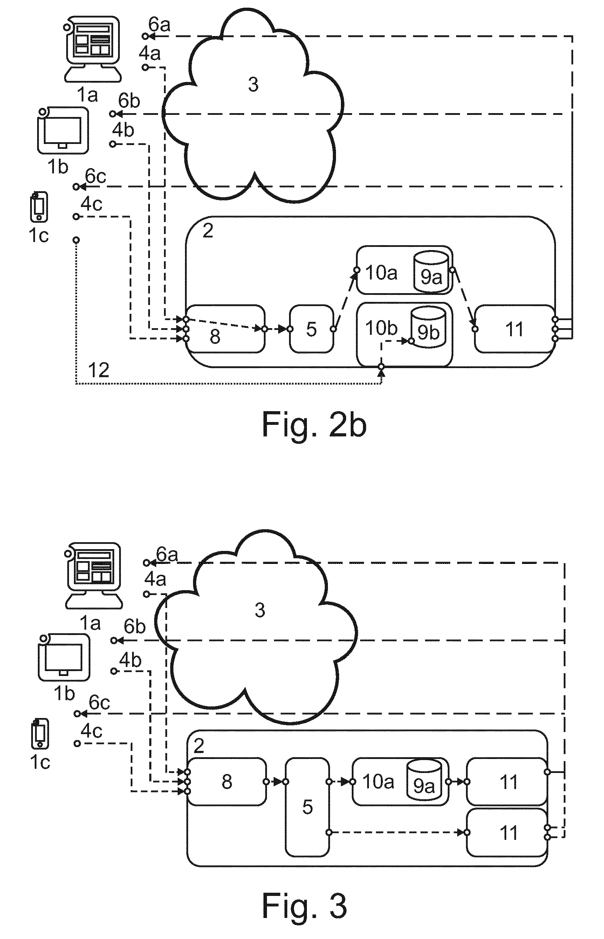

In relation to figures 2a, 2b, the server 2 comprises an increasing device 10b adapted for increasing the resolution and the visual quality of a video stream 4a, 4b, 4c by means of snapshots of said video streams that are regularly sent to the user sending said video stream.

In particular, in these figures 2a, 2b, the server 2 comprises a first increasing device 10b with a first dictionary 9b that comprises reference frames that are snapshots of videos streams 4a, 4b, 4c sent by users, such as a second increasing device 10a with a second dictionary 9a that comprises preloaded still images that are decorrelated from said video streams.

Moreover, for increasing the resolution and the visual quality of a video stream 4a, 4b, 4c, the server 2 chooses one of the increasing devices 10a, 10b according to contextual information, especially according to the technical capabilities of the terminal 1 a, 1b, 1 c and/or the network 3, 3a, 3b through which the user sending said video stream is connected to said server. The contextual information are notably established during the connection of the user sending the video stream 4a, 4b, 4c to the server 2 and thus communicated to said user through a specific media line in the response message of said server, said line describing information such as the channel used by the terminal 1 a, 1 b, 1 c of said user to send such snapshots.

Once a specific video stream 6a, 6b, 6c has been built, the process provides a step for encoding and sending said specific video stream to corresponding users. To do so, the server 2 comprises at least one device 11 for encoding and sending such specific video streams 6a, 6b, 6c to corresponding users.

In particular, several particular embodiments of the process and the server 2 will be described below in relation to each figure.

In figure 1, three users connect to the service through a same network 3 and through respectively a personal computer 1 a, a tablet 1 b and a smartphone 1 c and send each to the server 2 an INVITE SIP message. Moreover, each terminal 1 a, 1b, 1c presents enough technical capabilities to receive specific video streams 6a, 6b, 6c with high resolution and high visual quality.

In response, the server 2 creates a video conference session in the switching mode, such that every user will receive a specific video stream 6a, 6b, 6c built from only the video stream 4a, 4b, 4c sent by the loudest speaking user. Moreover, the server 2 sends back to each user a 200 OK SDP message for precising that video streams 4a, 4b, 4c should be sent with low resolution and that specific video streams 6a, 6b, 6c should be sent with high resolution and high visual quality.

Thus, during the session, the video streams 4a, 4b, 4c are first analysed by the detection device 8 for detecting the loudest speaking user, the video stream 4a, 4b, 4c of said loudest speaking user being decoded by the decoding device 5 and processed by the increasing device 10a by means of its implemented Super Resolution algorithm from information extracted from various still images that are decorrelated from said video stream, and the specific video stream 6a, 6b, 6c that has been built is thus encoded by the encoding device 11 and sent to each user.

In figures 2, three users also connect through terminals 1 a, 1b, 1c with high technical capabilities and send each to the server 2 an INVITE SIP message, the server 2 responding by creating a video conference session in the switching mode and by sending 200 SDP OK messages to each user.

However, the server 2 sends back to the user of the smartphone 1 c a specific 200 SDP OK message for enhancing video streams 4c of said user, i.e. by increasing the resolution and visual quality of said video streams, by means of snapshots of it. To do so, the 200 SDP OK message for this user comprises a specific media line to describe information, especially the channel used by the smartphone 1 c to send such snapshots.

Thus, during the session, the user of the smartphone 1 c sends regularly to a first increasing device 10b of the server 2 messages 12 comprising snapshots of his video stream 4c. As such, when the user of the smartphone 1 c become the loudest speaking user, his video stream 4c is decoded and enhanced by this first increasing device 10b, so that each user will receive a specific video stream 6a, 6b, 6c built from the video stream 4c of said user.

In relation to figure 2b, when one of the users connected through respectively the personal computer 1 a and the tablet 1 b becomes the loudest speaking user, his respective video stream 4a, 4b is also decoded and enhanced to be sent to each user, but the resolution and the visual quality of said stream are increased by a second increasing device 10a by means of common still images that are decorrelated from said stream.

In relation to figure 3, three users also connect through terminals 1 a, 1 b, 1 c and send each to the server 2 an INVITE SIP message, the server 2 responding by creating a video conference session in the switching mode and by sending 200 SDP OK messages to each user.

However, one user is connected through a personal computer 1 a with high technical capabilities, whereas the other users are connected through terminals 1 b, 1c with poor technical capabilities.

Thus, when one of the users of the terminals 1b, 1 c with poor capabilities becomes the loudest speaking user, his video stream 4b, 4c is decoded and the increasing device 10a increases its resolution and visual quality by means of common still images to build the specific video stream 6a to be sent to the user of the terminal 1 a with high capabilities. One the other side, the video stream 4b, 4c is encoded as such without any resolution and/or visual quality increasing to build the specific video streams 6b, 6c to be sent to other users.

In relation to figure 4, three users also connect through terminals 1 a, 1 b, 1 c with high technical capabilities and send each to the server 2 an INVITE SIP message, the server 2 responding by creating a video conference session in the tiled display mode and by sending 200 SDP OK messages to each user.

In particular, the defined tiled display template provides a big area and two small areas, such that the resolution and the visual quality of the video stream 4a, 4b, 4c that would be displayed on the big area should be increased. In the figure 4, the video stream 4c of the user of the smartphone 1c should be displayed on the big area, so that the increasing device 10a increases the resolution and the visual quality of said video stream by means of common still images, whereas the video streams 4a, 4b of other users are combined without any resolution and/or visual quality increasing with said resolution and visual quality increased video stream to build the specific video stream 6a, 6b, 6c to be sent to all users.

In relation to figure 5, three users connect through terminals 1 a, 1b, 1c and send each to the server 2 an INVITE SIP message, the server 2 responding by creating a video conference session in the switching mode and by sending 200 SDP OK messages to each user.

However, users of the personal computer 1 a and of the tablet 1 b are connected through a network 3a with high technical capabilities, whereas the user of the smartphone 1c is connected through a network 3b with low capabilities and/or congested. Thus, during the connection of the user of the smartphone 1 c, the server 2 sends back to him a Temporary Maximum Media Stream Bit Rate Request (TMMBR) message to limit the expected bandwidth, and said user thus will send a video stream 4c with low resolution and at a low bitrate.

Consequently, when the user of the smartphone 1c becomes the loudest speaking user, his video stream 4c is decoded and processed by an increasing device 10a by means of common still images to increase its resolution and visual quality, so as to build the specific video stream 6a, 6b to be sent to other users.

On the other side, when one of the users of the computer 1 a and the tablet 1 b becomes the loudest speaking user, his video stream 4a, 4b would be processed by the increased device 10a to build the specific video stream 6a, 6b to be sent to one of said users, whereas said video stream would be encoded as such without any resolution and/or visual quality increasing to build the specific video stream 6c for the user of the smartphone 1 c.

In relation to figure 6, three users connect through terminals 1a, 1b, 1c and send each to the server 2 an INVITE SIP message, the server 2 responding by creating a video conference session in the tiled display mode and by sending 200 SDP OK messages to each user.

As on figure 5, users of the personal computer 1 a and of the tablet 1b are connected through a network 3a with high technical capabilities, whereas the user of the smartphone 1c is connected through a network 3b with low capabilities and/or congested. Thus, during the connection of the user of the smartphone 1c, the server 2 sends back to him a Temporary Maximum Media Stream Bit Rate Request (TMMBR) message to limit the expected bandwidth, and said user thus will send a video stream 4c with low resolution and at a low bitrate.

Moreover, the display template of the tiled display mode provides a big area and two small areas.

Thus, when the video stream 4c of the user of the smartphone 1c should be displayed on the big area, the increasing device 10a increases the resolution and the visual quality of said video stream by means of common still images, so that the users of the computer 1 a and of the tablet 1 b can view the video stream 4c with high resolution and high visual quality on their specific video streams 6a, 6b.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for managing the exchanges of video streams (4a, 4b, 4c, 6a, 6b, 6c) between users that are connected through their terminals (1 a, 1 b, 1 c) to a video conference service provided by a server (2) over at least one network (3, 3a, 3b), each user sending through his terminal (1 a, 1b, 1c) to said server a video stream (4a, 4b, 4c) and receiving video streams (6a, 6b, 6c) of at least one other user connected to said video conference service, said process providing:
- a step for decoding at least one video stream (4a, 4b, 4c) sent by a user to said server;
- a step for building from said decoded video stream a specific video stream (6a, 6b, 6c) for each user according to contextual information;
- a step for encoding and sending said specific video streams to corresponding users;
said process being **characterized in that** the building step provides for increasing the resolution and the visual quality of the decoded video stream (4a, 4b, 4c) by means of a Super Resolution algorithm adapted to use information extracted from at least one dictionary (9a, 9b), said resolution and visual quality increased video stream being encoded and sent to users according to contextual information.

2. Process according to claim 1, **characterized in that** the resolution and the visual quality of the video stream (4a, 4b, 4c) are increased by using information extracted from still images with high resolution and high visual quality that are stored in at least one dictionary (9a, 9b).

3. Process according to claim 2, **characterized in that** it provides a first dictionary (9b) comprising reference frames that are snapshots of video streams (4a, 4b, 4c) sent by users and that are sent by said users at a given period to update said dictionary (9b), such as a second dictionary (9a) comprising preloaded still images that are decorrelated from said video streams, said process further choosing a dictionary for increasing the resolution and the visual quality of a video stream (4a, 4b, 4c) according to contextual information.

4. Process according to any of claims 1 to 3, **characterized in that** it provides a prior step for analysing the video streams (4a, 4b, 4c) to detect the loudest speaking user, the building step building a specific video stream (6a, 6b, 6c) wherein the video stream (4a, 4b, 4c) of said loudest speaking user is highlighted.

5. Process according to any of claims 1 to 4, **characterized in that** the building step further provides for combining decoded video streams (4a, 4b, 4c) of several users to build a single tiled specific video stream (6a, 6b, 6c), said tiled specific video stream further being encoded and sent to at least one user according to contextual information.

6. Process according to any of claims 1 to 5, **characterized in that** the contextual information are established according to at least information about technical capacities of the terminal (1 a, 1 b, 1 c) and/or the network (3, 3a, 3b) through which a user is connected to the video conference service.

7. Server (2) for providing a video conference service over at least one network (3, 3a, 3b), users being connected to said service through their terminals (1 a, 1b, 1c) and exchanging video streams (4a, 4b, 4c, 6a, 6b, 6c) between each other, each user sending through his terminal (1 a, 1 b, 1 c) to said server a video stream (4a, 4b, 4c) and receiving video streams (6a, 6b, 6c) of at least one other user connected to said video conference service, said server comprising:
- at least one device (5) for decoding at least one video stream (4a, 4b, 4c) sent by a user to said server;
- at least one device (7, 10a, 10b) for building from said decoded video stream a specific video stream (6a, 6b, 6c) for each user according to contextual information;
- at least one device (11) for encoding and sending said specific video streams to corresponding users;
said server being **characterized in that** at least one building device is an increasing device (10a, 10b) that comprises a dictionary (9a, 9b), such as means for implementing a Super Resolution algorithm adapted for extracting and using information from said dictionary to increase the resolution and the visual quality of a decoded video stream (4a, 4b, 4c), the encoding device (11) further encoding and sending said resolution and video quality increased video stream to users according to contextual information.

8. Server (2) according to claim 7, **characterized in that** the dictionary (9a, 9b) comprises still images with high resolution and high visual quality, the increasing device (10a, 10b) being adapted to increase the resolution and the visual quality of the video stream (4a, 4b, 4c) by using information extracted from said still images.

9. Server (2) according to claim 8, **characterized in that** it comprises a first increasing device (10b) with a first dictionary (9b) that comprises reference frames that are snapshots of video streams (4a, 4b, 4c) sent by users and that are sent by said users at a given period to update said dictionary (9b), such as a second increasing device (10a) with a second dictionary (9a) that comprises preloaded still images that are decorrelated from said video streams, said server choosing one of said increasing devices (10a, 10b) for increasing the resolution and the visual quality of a video stream (4a, 4b, 4c) according to contextual information.

10. Server (2) according to any of claims 7 to 9, **characterized in that** it comprises a detection device (8) comprising means for prior analysing the video streams (4a, 4b, 4c) to detect the loudest speaking user, the building device (7, 9a, 9b) building a specific video stream (6a, 6b, 6c) wherein the video stream (4a, 4b, 4c) of said loudest speaking user is highlighted.

11. Server (2) according to any of claims 7 to 10, **characterized in that** it comprises a device (4) for combining decoded video streams (4a, 4b, 4c) of several users to build a single tiled specific video stream (6a, 6b, 6c), the encoding device (11) further encoding and sending said tiled specific video stream to at least one user according to contextual information.

12. Server (2) according to any of claims 7 to 11, **characterized in that** it comprises means for establishing contextual information according to at least information about technical capacities of the terminal (1 a, 1b, 1c) and/or the network (3, 3a, 3b) through which a user is connected to the video conference service.

13. Computer program adapted to perform a process according to any of claims 1 to 6.

14. Computer readable storage medium comprising instructions to cause a data processing apparatus to carry out a process according to any of claims 1 to 6.
